# EUROPÄISCHE PATENTANMELDUNG

(11) **EP 2 154 502 A2**
(43) Veröffentlichungstag der Anmeldung: **17.02.2010**
(21) Anmeldenummer: 09100334.3
(22) Anmeldetag: 12.06.2009
(51) Int. Cl.: G01K 7/24, F01P 7/14, G01F 1/69, G01F 1/696

(54) **Verfahren zur Bestimmung der Temperatur und des Volumenstroms eines Fluids sowie Schaltungsanordnung und Motorsteuergerät**

(30) Priorität: 06.08.2008 DE 102008041026
(71) Anmelder: ROBERT BOSCH GMBH, 70442 Stuttgart (DE)
(72) Erfinder: Kassner, Uwe, 71696, Moeglingen (DE)

(57) **Zusammenfassung**

Die Erfindung betrifft ein Verfahren zur Bestimmung der Temperatur und des Volumenstroms eines Fluids, wobei die Temperatur unter Verwendung eines Temperatursensors (22) gemessen wird. Dabei ist vorgesehen, dass zur Bestimmung des Volumenstroms der Temperatursensor (22) unabhängig von dem Fluid, insbesondere vorbestimmt, erwärmt oder abgekühlt wird, und dass dann mittels des Temperatursensors (22) durch Erfassen seiner Temperaturänderung auch der Volumenstrom bestimmt wird. Die Erfindung betrifft ferner eine Schaltungsanordnung zur Bestimmung einer Temperatur und eines Volumenstroms eines Fluids sowie ein Motorsteuergerät eines Kraftfahrzeugs.

## Beschreibung

Die Erfindung betrifft ein Verfahren zur Bestimmung der Temperatur und des Volumenstroms eines Fluids, wobei die Temperatur unter Verwendung eines Temperatursensors gemessen wird. Ferner umfasst die Erfindung eine Schaltungsanordnung zur Bestimmung einer Temperatur und eines Volumenstroms eines Fluids sowie ein Motorsteuergerät eines Kraftfahrzeugs.

### Stand der Technik

Verfahren der eingangs genannten Art sind bekannt. Sie werden häufig in Kraftfahrzeugen eingesetzt, in welchen für eine Kühlung eines Antriebsaggregats zunehmend komplexe Systemen, insbesondere mit mehreren Teilkühlkreisläufen, verbaut werden. Damit soll eine optimierte Erwärmung der Brennkraftmaschine und beispielsweise eines Fahrzeuginnenraums erreicht werden, wozu geeignete Steuerstrategien für die Teilkühlkreisläufe durch Ansteuerung von Ventilen und/oder Kühlmittelpumpen eingesetzt werden. Vorteilhaft ist hierbei die Überwachung von Temperatur und Volumenstrom in ausgewählten Teilkühlkreisläufen, um diese auf die vorliegenden Bedingungen anpassen zu können. Die Temperatur kann mit preiswerten Temperatursensoren bestimmt werden. Eine Überwachung des Kühlkreislaufs lediglich auf Basis der Temperatur ist jedoch mit Unsicherheiten behaftet. Die an sich vorteilhafte Messung des Volumenstroms des Fluids dagegen vergleichsweise aufwendig, da eine Konstruktion für eine Aufnahme des Volumenstromsensors notwendig ist. Ein solcher Sensor ist zudem kostenintensiv.

### Offenbarung der Erfindung

Demgegenüber weist das Verfahren zur Bestimmung der Temperatur und des Volumenstroms eines Fluids mit den in Anspruch 1 genannten Merkmalen den Vorteil auf, dass kein zusätzlicher Volumenstromsensor notwendig ist und damit keine konstruktiven Maßnahmen zur Unterbringung des Sensors vorgesehen werden müssen. Durch den Wegfall des Volumenstromsensors ergibt sich zudem ein Kostenvorteil. Diese Vorteile werden erreicht, indem zur Bestimmung des Volumenstroms der Temperatursensor unabhängig von der Fluidtemperatur, insbesondere vorbestimmt, erwärmt oder abgekühlt wird, und dass dann mittels des Temperatursensors durch Erfassen seiner Temperaturänderung auch der Volumenstrom bestimmt wird. Das bedeutet, dass der Volumenstrom mittels des Temperatursensors bestimmt wird. Zu diesem Zweck wird der Temperatursensor erwärmt oder abgekühlt, sodass eine Temperaturdifferenz zu dem den Temperatursensor umgebenden Fluid vorliegt. Bevorzugt ist die Erwärmung oder Abkühlung vorbestimmt, das heißt, sie erfolgt auf Grundlage einer vorher festgelegten Temperaturdifferenz. Nach dem Erwärmen oder Abkühlen wird die Temperatur des Temperatursensors zu vorzugsweise mindestens zwei Zeitpunkten bestimmt. Dabei wird eine Temperaturänderung erfasst, aus welcher auf den Volumenstrom des Fluids geschlossen werden kann. Durch das den Temperatursensor umgebende Fluid wird dieser nachfolgend dem Erwärmen oder Abkühlen abgekühlt oder erwärmt, bis ein thermisches Gleichgewicht zwischen dem Temperatursensor und dem Fluid vorliegt. Je größer der Volumenstrom, das heißt je größer die Geschwindigkeit des Fluids, mit welcher der Temperatursensor angeströmt wird, desto höher ist der Wärmeübergang zwischen Temperatursensor und Fluid, umso schneller läuft also die Abkühlung oder Erwärmung ab. Es kann vorgesehen sein, dass der Temperatursensor in einem Normalbetrieb zur Messung der Temperatur und in Intervallen zur Bestimmung des Volumenstroms eingesetzt wird. Das bedeutet, dass der Temperatursensor zeitlich beabstandet erwärmt oder abgekühlt wird. Dies geschieht unabhängig von dem Fluid, das Erwärmen oder Abkühlen kann aber abhängig von einer Fluidtemperatur erfolgen.

Eine Weiterbildung der Erfindung sieht vor, dass als Temperatursensor ein temperaturabhängiger Widerstand, insbesondere NTC-Widerstand oder PTC-Widerstand, verwendet wird. Mit dem temperaturabhängigen Widerstand lässt sich ein besonders preisgünstiger Temperatursensor bei gleichzeitig sehr hoher Genauigkeit realisieren. Der temperaturabhängige Widerstand ist ein elektronisches Bauteil, welches seinen elektrischen Widerstand in Abhängigkeit von seiner Temperatur ändert. Beispielsweise kann ein NTC-Widerstand, also ein Widerstand, dessen elektrischer Widerstand mit steigender Temperatur abnimmt, eingesetzt werden (NTC: negative temperature coefficient). Alternativ kann auch ein PTC-Widerstand eingesetzt werden, dessen elektrischer Widerstand mit steigender Temperatur zunimmt (PTC: positiv temperature coefficient). Damit der Temperatursensor schnell auf Temperaturänderungen des ihn umgebenden Fluids reagieren kann, ist es notwendig, dass der Temperatursensor eine möglichst geringe Masse aufweist.

Eine Weiterbildung der Erfindung sieht vor, dass der Temperatursensor als Teil einer Spannungsteilerschaltung eingesetzt wird. Als Bestandteil der Spannungsteilerschaltung kann ein Spannungsabfall an dem Temperatursensor einfach bestimmt werden. Aus dem Spannungsabfall und dem durch die Spannungsteilerschaltung fließenden Strom kann anschließend der elektrische Widerstand des Temperatursensors berechnet werden. Aus diesem elektrischen Widerstand ergibt sich die Temperatur des Temperatursensors.

Eine Weiterbildung der Erfindung sieht vor, dass ein Signal des Temperatursensors mittels eines Mikrocontrollers ausgewertet und daraus die Temperatur bestimmt wird. Um das Signal des Temperatursensors auszuwerten, wird ein integriertes Bauteil, insbesondere ein Mikrocontroller, eingesetzt. An dieses ist der Temperatursensor elektrisch angeschlossen, beispielsweise direkt oder über eine zusätzliche Schaltungsanordnung. Das integrierte Bauteil beziehungsweise der Mikrocontroller empfängt somit das Signal des Temperatursensors und wertet dieses aus, beispielsweise indem der elektrische Widerstand des Temperatursensors bestimmt wird. Anhand des Signals ermittelt das integrierte Bauteil, welche Temperatur der Temperatursensor aufweist. Beispielsweise kann dies anhand einer Tabelle erfolgen, in welcher elektrischen Widerständen entsprechende Temperaturwerte hinterlegt sind. Dabei kann auch eine Interpolation, beispielsweise eine lineare Interpolation, zwischen benachbarten Tabelleneinträgen erfolgen. Die Temperatur des Temperatursensors beziehungsweise des den Temperatursensors umgebenden Fluids kann jedoch auch mittels einer mathematischen Beziehung aus dem Signal des Temperatursensors bestimmt werden.

Eine Weiterbildung der Erfindung sieht vor, dass der Mikrocontroller zur Auswertung über einen A/D-Wandler verfügt. Mittels des A/D-Wandlers wandelt der Mikrocontroller ein von dem Temperatursensor geliefertes analoges Signal in ein digitales um. Dieses digitale Signal kann von dem Mikrocontroller weiter ausgewertet werden. Durch das Integrieren des A/D-Wandlers in den Mikrocontroller kann die Größe der zur Auswertung der Temperatur und des Volumenstroms notwendigen Schaltung reduziert werden.

Eine Weiterbildung der Erfindung sieht vor, dass das Erwärmen oder Abkühlen des Temperatursensors von dem Mikrocontroller gesteuert und/oder geregelt wird. Beispielsweise kann der Mikrocontroller das Erwärmen oder Abkühlen so einstellen, dass der Temperatursensor eine, insbesondere vorbestimmte, Temperaturdifferenz zu dem ihn umgebenden Fluid aufweist. Es kann auch vorgesehen sein, dass der Mikrocontroller mittels des Temperatursensors die Temperatur des Fluids misst und darauf basierend eine neue Temperatur bestimmt, welche der Temperatursensor nach dem Erwärmen oder Abkühlen aufweisen soll.

Eine Weiterbildung der Erfindung sieht vor, dass das Erwärmen durch Anlegen einer Spannung an den Temperatursensor erfolgt. Stellt der Temperatursensor einen elektrischen Widerstand dar, so kann dieser durch das Anlegen einer Spannung erwärmt werden. In diesem Fall wird die zugeführte elektrische Energie in dem Widerstand in Wärme umgesetzt. Alternativ kann es auch vorgesehen sein, dass der Temperatursensor mit mindestens einem Heizelement, insbesondere einer Heizspirale, versehen ist. Mittels dieser kann der Temperatursensor durch das Anlegen der Spannung ebenso erwärmt werden.

Eine Weiterbildung der Erfindung sieht vor, dass die Temperaturänderung durch eine bis zum Erreichen einer bestimmten Temperatur benötigte Zeit und/oder eine Temperaturdifferenz zwischen festgelegten Zeitpunkten charakterisiert wird. Die Temperaturänderung kann beispielsweise ein Temperaturgradient in der Form Temperaturänderung pro Zeiteinheit sein. Das bedeutet, dass beispielsweise eine Zeit gemessen wird, welche bis zum Erreichen einer bestimmten Temperatur benötigt wird. Der Temperatursensor wird also auf eine vorbestimmte Temperatur erwärmt oder abgekühlt und im Anschluss daran die Zeit gemessen, welche benötigt wird, um auf die bestimmte Temperatur zu gelangen. Alternativ kann auch vorgesehen sein, an mindestens zwei Zeitpunkten Temperaturen des Temperatursensors zu messen und aus diesen Temperaturen eine Temperaturdifferenz beziehungsweise die Temperaturänderung zu bestimmen.

Eine Weiterbildung der Erfindung sieht vor, dass die Bestimmung der Temperaturänderung und des Volumenstroms mittels des Mikrocontrollers erfolgt. Der Mikrocontroller bestimmt also neben der Temperatur des Temperatursensors auch die Temperaturänderung und berechnet aus dieser den Volumenstrom des Fluids. Dies kann beispielsweise über eine Tabelle erfolgen, über welche verschiedene relevante Zustandsgrößen mit dem Volumenstrom verknüpft sind. Diese Zustandsgrößen können beispielsweise die Verteilung eines Kühlmittelstroms auf verschiedene Teilkühlkreisläufe, eine Fluidtemperatur und ein Zustand eines Fördermittels, beispielsweise eine Kühlmittelpumpendrehzahl, sein. Für diese Parameter werden Abkühlbeziehungsweise Aufheizkurven gemessen und in dem Mikrocontroller in Form der Tabelle hinterlegt. Alternativ kann der Volumenstrom auch über eine mathematische Beziehung mit der Temperaturänderung verknüpft sein. Die Temperaturänderung wird bestimmt, indem beispielsweise die Temperatur des Temperatursensors zu verschiedenen Zeitpunkten gemessen wird.

Eine Weiterbildung der Erfindung sieht vor, dass als Fluid ein Kühlmittel verwendet wird. Das vorstehend beschriebene Verfahren kann besonders vorteilhaft zur Bestimmung der Temperatur und des Volumenstroms eines Kühlmittels in einem Kühlkreislauf eines Kraftfahrzeugs eingesetzt werden.

Eine Weiterbildung der Erfindung sieht vor, dass die gemessene Temperatur und/oder der bestimmte Volumenstrom als Eingangsgröße(n) zur Steuerung und/oder Regelung eines Kühlkreislaufs, insbesondere eines Kraftfahrzeugs verwendet wird/werden. Beispielsweise kann eine Aufteilung eines Kühlmittelstroms auf zwei Teilkühlkreisläufe gesteuert werden. Somit kann die Erwärmung der Brennkraftmaschine und des Fahrzeuginnenraums optimiert werden. Als weitere relevante Größen können in die Steuerung und/oder Regelung ein Betriebspunkt der Brennkraftmaschine, Klimatisierungsanforderungen des Fahrzeuginnenraums und/oder eine Außentemperatur einfließen. In Abhängigkeit von diesen Größen und/oder der gemessenen Temperatur und/oder des bestimmten Volumenstroms kann die Steuerung und/oder Regelung des Kühlkreislaufs optimiert werden.

Eine Weiterbildung der Erfindung sieht vor, dass die Steuerung des Kühlkreislaufs durch Ansteuerung mindestens eines Ventils und/oder mindestens eines Fördermittels, insbesondere für das Kühlmittel, erfolgt. Das Ventil kann beispielsweise ein proportional ansteuerbares Ventil und das Fördermittel eine Kühlmittelpumpe sein. Mittels des Ventils kann beispielsweise die Aufteilung des Fluids auf mehrere Teilkühlkreisläufe eingestellt werden. Das Fördermittel dient zur Förderung des Fluids innerhalb des Kühlkreislaufs beziehungsweise der Teilkühlkreisläufe. Dabei kann in jedem Teilkühlkreislauf ein Fördermittel vorgesehen sein.

Eine Weiterbildung der Erfindung sieht vor, dass der Mikrocontroller das mindestens eine Ventil und/oder das mindestens eine Fördermittel ansteuert. Der Mikrocontroller bestimmt also aus verschiedenen Eingangsgrößen, beispielsweise der Temperatur, dem Volumenstrom, dem Betriebspunkt der Brennkraftmaschine, den Klimatisierungsanforderungen des Fahrzeuginnenraums und/oder der Außentemperatur, eine Ansteuerung des Ventils und/oder des Fördermittels. Dies erfolgt vorzugsweise so, dass ein jeweiliges Optimierungsziel erreicht wird. Das Optimierungsziel kann beispielsweise eine gezielte Erwärmung der Brennkraftmaschine oder des Fahrzeuginnenraums sein. Das Ventil und/oder das Fördermittel sind direkt und/oder über ein weiteres Schaltungselement, beispielsweise eine Leistungselektronik, an den Mikrocontroller angeschlossen. Auf diese Weise kann sowohl die Bestimmung der Temperatur, der Temperaturänderung und des Volumenstroms sowie die daraus resultierende Ansteuerung des Ventils und/oder des Fördermittels von dem Mikrocontroller vorgenommen werden.

Eine Weiterbildung der Erfindung sieht vor, dass das Verfahren zu einer Überwachung des Ventils und/oder des Fördermittels eingesetzt wird. Auf diese Weise kann beispielsweise ein Defekt des Ventils und/oder des Fördermittels festgestellt oder gezielt ein bestimmter Volumenstrom eingestellt werden. Letzteres kann beispielsweise in einem iterativen Prozess geschehen, ohne dass beispielsweise in einer Tabelle hinterlegt sein muss, welche Ventilstellung und/oder Fördermittelleistung unter bestimmten Randbedingungen mit einem Volumenstrom des Fluids korelliert. Vielmehr kann vorgesehen sein, die Ventilstellung und/oder die Fördermittelleistung zu variieren, den Volumenstrom zu messen und diese Vorgänge solange zu wiederholen, bis der gewünschte Volumenstrom erreicht ist. Auf diese Weise kann eine sehr genaue, von äußeren Einflüssen unabhängige Einstellung des Volumenstroms erreicht werden.

Eine Weiterbildung der Erfindung sieht vor, dass unmittelbar nach einem Start einer Brennkraftmaschine zunächst der Volumenstrom bestimmt wird. Nach dem Start der Brennkraftmaschine stimmt die Temperatur des Fluids beziehungsweise des Kühlmittels häufig mit der Umgebungstemperatur überein. Eine zuverlässige Regelung auf dieser Grundlage ist somit nur schwierig zu realisieren beziehungsweise beruht auf geschätzten Größen. Um die Genauigkeit zu erhöhen, wird daher zunächst der Volumenstrom bestimmt, um eine erste Einstellung des Ventils und/oder des Fördermittels vorzunehmen. Während eines weiteren Betriebs der Brennkraftmaschine kann dann hauptsächlich die Temperatur gemessen und nur in relativ großen Zeitabständen der Volumenstrom bestimmt werden, um beispielsweise das Ventil und/oder das Fördermittel auf aktuelle Bedingungen einzustellen.

Die Erfindung umfasst ferner eine Schaltungsanordnung zur Bestimmung einer Temperatur und eines Volumenstroms eines Fluids, insbesondere zur Umsetzung des vorstehend beschriebenen Verfahrens, wobei die Temperatur unter Verwendung eines Temperatursensors gemessen wird. Es ist vorgesehen, dass mittels des Temperatursensors auch der Volumenstrom bestimmbar ist. Die Schaltungsanordnung kann beispielsweise den Mikrocontroller umfassen. Zusätzlich können Schaltelemente zur Ansteuerung des Ventils und/oder des Fördermittels sowie eine Schaltung zur Ansteuerung des Temperatursensors vorgesehen sein. Die Schaltungsanordnung verfügt beispielsweise auch über weitere Eingänge, über welche weitere Größen, wie beispielsweise die Außentemperatur, bekannt sind. Auch weitere Ausgänge, beispielsweise zur Ansteuerung einer Klimaanlage des Kraftfahrzeugs, können vorgesehen sein.

Die Erfindung umfasst weiterhin ein Motorsteuergerät eines Kraftfahrzeugs, insbesondere mit einer Schaltungsanordnung gemäß den vorstehenden Ausführungen, wobei das Motorsteuergerät einen Kühlkreislauf des Kraftfahrzeugs steuert und/oder regelt und eine Temperatur und einen Volumenstrom bestimmt, insbesondere unter Umsetzung des vorstehend beschriebenen Verfahrens, wobei die Temperatur unter Verwendung eines Temperatursensors gemessen wird. Dabei ist vorgesehen, dass mittels des Temperatursensors auch der Volumenstrom bestimmbar ist. Die vorstehend beschriebene Schaltungsordnung kann also an dem Motorsteuergerät des Kraftfahrzeugs vorgesehen sein. Vorzugsweise dient dabei die gemessene Temperatur und der bestimmte Volumenstrom zum Einstellen eines optimalen Betriebspunkt der Brennkraftmaschine, insbesondere des Kühlkreislaufs.

### Kurze Beschreibung der Zeichnungen

Die Erfindung wird im Folgenden anhand der in der Zeichnung dargestellten Ausführungsbeispiele näher erläutert, ohne dass eine Beschränkung der Erfindung erfolgt. Es zeigen die
- Figur 1: eine schematische Darstellung eines Kühlkreislaufs eines Kraftfahrzeugs mit mehreren Teilkühlkreisläufen,
- Figur 2: eine Schaltungsanordnung zur Kühlmitteltemperaturmessung,
- Figur 3: eine Schaltungsanordnung zur Kühlmitteltemperaturmessung und zur Bestimmung eines Volumenstroms des Kühlmittels, und die
- Figur 4: einen Verlauf eines elektrischen Widerstands eines zur Bestimmung des Volumenstroms eingesetzten Temperatursensors in Abhängigkeit von der Zeit.

### Ausführungsform(en) der Erfindung

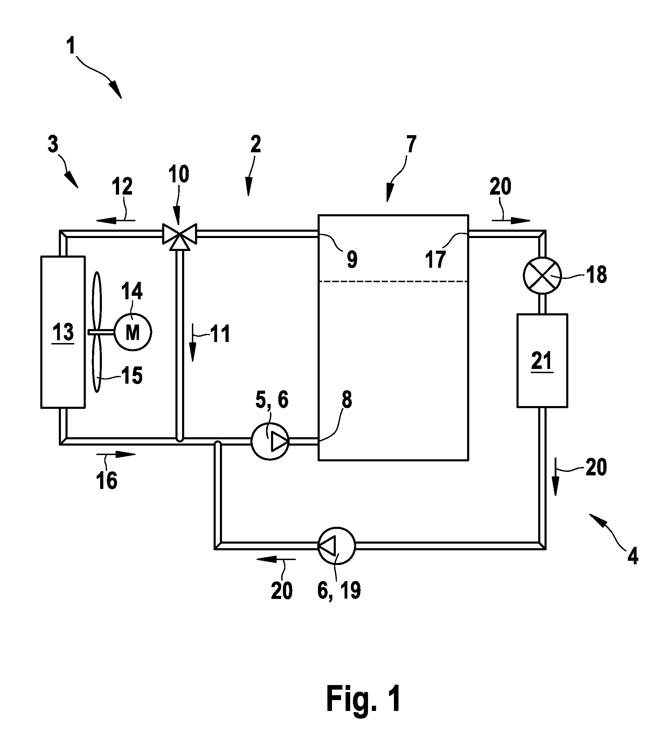

Die Figur 1 zeigt eine schematische Darstellung eines Kühlkreislaufs 1 eines nicht dargestellten Kraftfahrzeugs. Der Kühlkreislauf 1 besteht aus einem ersten Teilkühlkreislauf 2, einem zweiten Teilkühlkreislauf 3 und einem dritten Teilkühlkreislauf 4. Der erste Teilkühlkreislauf 2 weist ein als Kühlmittelpumpe 5 ausgebildetes Fördermittel 6 auf. Der Kühlkreislauf 1 ist mit einem Fluid gefüllt, welches als Kühlmittel dient. Die Kühlmittelpumpe 5 fördert das Kühlmittel in Richtung der Brennkraftmaschine 7, in welcher das Kühlmittel während eines Normalbetriebs der Brennkraftmaschine 7 aufgeheizt wird, wobei es der Kühlung der Brennkraftmaschine 7 dient. Die Brennkraftmaschine 7 weist einen Kühlmitteleinlass 8 auf, über welchen das Kühlmittel in die Brennkraftmaschine 7 beziehungsweise eine dort angeordnete Kühlvorrichtung gelangen kann. Nach Durchlaufen der Brennkraftmaschine 7 und damit Aufwärmen des Kühlmittels kann das Kühlmittel an dem Kühlmittelauslass 9 wieder in den ersten Teilkühlkreislauf 2 eintreten. Der erste Teilkühlkreislauf 2 ist mittels eines Ventils 10 mit dem zweiten Teilkühlkreislauf 3 verbunden. In Abhängigkeit von einer Ansteuerung des Ventils 10 teilt sich das Kühlmittel so auf, dass eine erste Menge Kühlmittel in Richtung des Pfeils 11 strömt und eine zweite Menge Kühlmittel in Richtung des Pfeils 12. Die erste Menge Kühlmittel wird unmittelbar von der Kühlmittelpumpe 5 wieder in Richtung der Brennkraftmaschine 7 gefördert. Die zweite Menge des Kühlmittels durchläuft eine Kühleinrichtung 13, in welcher sie auf ein niedrigeres Temperaturniveau abgekühlt wird. Die Kühleinrichtung 13 kann dabei beispielsweise von einem durch einen Motor 14 angetriebenen Ventilator 15 mit einem Luftstrom beaufschlagt sein. Auf diese Weise kann die Wärme, welche das Kühlmittel in der Brennkraftmaschine 7 aufgenommen hat, an eine Umgebung abgeführt werden und so das Kühlmittel wieder abgekühlt werden. Nach dem Durchlaufen der Kühleinrichtung 13 und dem Abkühlen strömt das Kühlmittel in Richtung des Pfeils 16 und kann von der Kühlmittelpumpe 5 wieder der Brennkraftmaschine 7 zugeführt werden. Über das Ventil 10 kann also eingestellt werden, ob das Kühlmittel die Kühleinrichtung 13 durchlaufen soll, bevor es wieder in die Brennkraftmaschine 7 gelangt. In einer gewissen Zeitspanne nach einem Start der Brennkraftmaschine 7 wird das Ventil 10 so eingestellt sein, dass das Kühlmittel im Wesentlichen vollständig in Richtung des Pfeils 11 strömt und somit nicht in die Kühleinrichtung 13 gelangt. Auf diese Weise kann die Brennkraftmaschine 7 schneller auf Betriebstemperatur gebracht werden. Erst wenn das Kühlmittel in dem ersten Teilkühlkreislauf 2 eine bestimmte Temperatur erreicht hat, wird das Ventil 10 so eingestellt, dass zumindest ein Teil des Kühlmittels in den zweiten Teilkühlkreislauf 3 gelangt und somit die Kühleinrichtung 13 durchläuft, bevor es wieder der Brennkraftmaschine 7 zugeführt wird. Die Brennkraftmaschine 7 verfügt über einen weiteren Kühlmittelauslass 17, durch welchen das aufgeheizte Kühlmittel in den dritten Teilkühlkreislauf 4 eintreten kann. Der dritte Teilkühlkreislauf 4 weist ein Ventil 18, welches hier als Magnetventil ausgebildet ist, und eine weitere Kühlmittelpumpe 19 auf. Bei geöffnetem Ventil 18 und aktiver Kühlmittelpumpe 19 kann das Kühlmittel durch den Kühlmittelauslass 17 in Richtung der Pfeile 20 durch den dritten Teilkühlkreislauf 4 strömen. Das in der Brennkraftmaschine 7 aufgewärmte Kühlmittel wird in einer Heizung 21 verwendet, um einen Innenraum des Kraftfahrzeugs aufzuheizen. In der Heizung 21 wird dem Kühlmittel Wärme entzogen und damit der Innenraum des Kraftfahrzeugs aufgeheizt. Die Stellung des Ventils 18 und die Förderleistung der Kühlmittelpumpe 19 hängen also sowohl von der Temperatur des Kühlmittels als auch von einer von einem Fahrer des Kraftfahrzeugs gewünschten Heizleistung ab. Nach Durchlaufen der Heizung 21 kann das Kühlmittel aus dem dritten Teilkühlkreislauf 4 wieder in den ersten Teilkühlkreislauf 2 gelangen und wird dort von der Kühlmittelpumpe 5 wieder der Brennkraftmaschine 7 zugeführt. Vorteilhafterweise ist in jedem Teilkühlkreislauf 2, 3 und 4 mindestens ein Temperatursensor 22 vorgesehen (in Figur 1 nicht dargestellt), um eine Temperatur des Kühlmittels und einen Volumenstrom zu bestimmen. Ferner ist eine Schaltungsanordnung 23 mit einem Mikrokontroller 24 (beide in Figur 1 nicht dargestellt) zur Messung der Temperatur und des Volumenstroms mittels des Temperatursensors 22 und der Steuerung und/oder Regelung der Kühlmittelpumpe 5, des Ventils 10, der Kühleinrichtung 13 beziehungsweise des Motors 14, des Ventils 18 und/oder der Kühlmittelpumpe 19 vorgesehen. Die Ansteuerung und/oder Regelung erfolgt dabei in Abhängigkeit von den gemessenen Temperaturen beziehungsweise den bestimmten Volumenströmen.

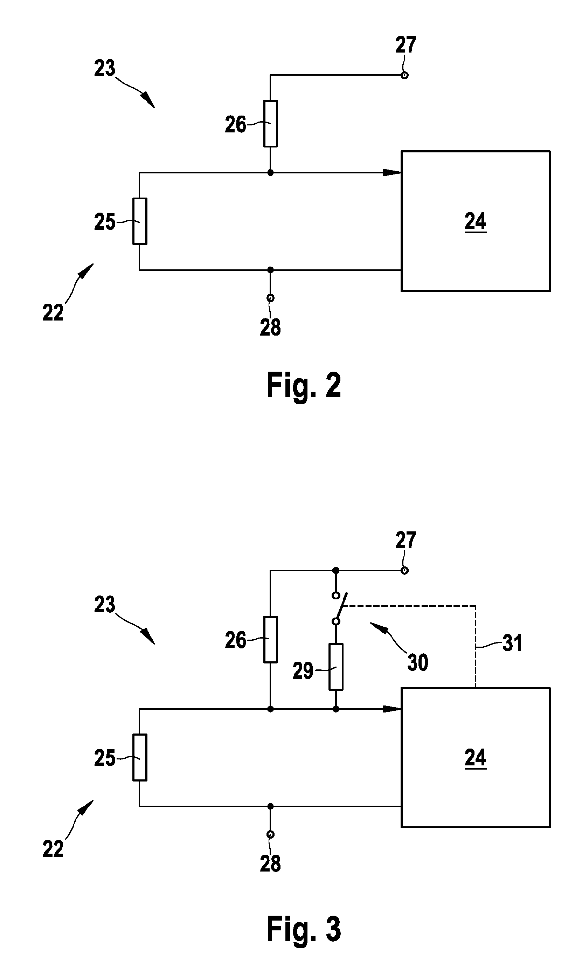

Die Figur 2 zeigt die Schaltungsanordnung 23 in einer Ausführungsform, welche lediglich eine Messung der Temperatur erlaubt. Die Schaltungsanordnung 23 weist den Temperatursensor 22 auf, welcher als temperaturabhängiger Widerstand 25 ausgebildet ist. Vorzugsweise wird ein NTC-Widerstand verwendet, alternativ ist aber auch ein PTC-Widerstand möglich. Der Widerstand 25 ist in Reihe mit einem weiteren Widerstand 26 geschaltet, welcher im Wesentlichen nicht temperaturabhängig ist. Parallel zu dem temperaturabhängigen Widerstand 25 ist der Mikrocontroller 24 angeschlossen. An den Anschlüssen 27 und 28 wird eine Versorgungsspannung angelegt. Der Temperatursensor 22 ist innerhalb des Kühlkreislaufs 1 beziehungsweise der Teilkühlkreisläufe 2 bis 4 angeordnet, sodass er von Kühlmittel umgeben ist. Durch Wärmeübergang zwischen dem Kühlmittel und dem Widerstand 25 wird sich die Temperatur des Widerstands 25 ohne äußere Einflüsse daher der Temperatur des Fluids annähern. In Abhängigkeit von der Temperatur des Widerstands 25 und damit auch in Abhängigkeit von der Temperatur des den Widerstand umgebenden Kühlmittels ändert sich der elektrische Widerstand des Widerstands 25. Der Mikrocontroller 24 weist einen A/D-Wandler auf, sodass der Spannungsabfall über den Widerstand 25 von dem Mikrocontroller 24 erfasst werden kann. Gleichzeitig wird der durch die Schaltungsanordnung 23 fließende Strom bestimmt. Daraus kann der Widerstand des temperaturabhängigen Widerstands 25 berechnet und anschließend auf die Temperatur des Temperatursensors 22 beziehungsweise des Kühlmittels geschlossen werden.

Die Figur 3 zeigt die aus der Figur 2 bekannte Schaltungsanordnung 23. Hinzugekommen ist eine parallel zu dem Widerstand 26 geschaltete Anordnung aus einem Widerstand 29 und einem Schaltelement 30, vorzugsweise einem Transistor. Das Schaltelement 30 ist über eine Verbindung 31 von dem Mikrocontroller 24 ansteuerbar. Das bedeutet, dass eine zu dem Widerstand 26 parallele Verbindung von dem Mikrocontroller 24 aktivierbar ist. Ist durch das Schaltelement 30 keine Verbindung hergestellt, so liegt schaltungstechnisch dieselbe Anordnung vor wie in Figur 2 beschrieben. Ist das Schaltelement 30, beispielsweise durch den Mikrocontroller 24, geschlossen, so fließt durch den temperaturabhängigen Widerstand 25 ein höherer Strom, womit sich dieser aufheizt. Durch das Schließen des Schaltelements 30 kann also der Widerstand 25 auf ein höheres Temperaturniveau gebracht werden. Der Widerstand 29 begrenzt den durch den Widerstand 25 fließenden Strom so, dass sich dieser zwar aufheizt, aber nicht beschädigt wird. Hat der Widerstand 25 ein gewünschtes Temperaturniveau erreicht, so wird das Schaltelement 30 geöffnet und die dem Widerstand 26 parallele Verbindung unterbrochen. Folglich beginnt sich der Widerstand 25 abzukühlen und dem Temperaturniveau des ihn umgebenden Fluids wieder anzupassen. Der Mikrocontroller 24 bestimmt beispielsweise in definierten Zeitabständen die Temperatur des Widerstands 25 und ermittelt daraus eine Temperaturänderung. Aufgrund dieser Temperaturänderung kann auf dem Volumenstrom des Kühlmittels geschlossen werden. Sowohl die Bestimmung der Temperaturänderung als auch die Umrechnung in einen Volumenstromwert kann in dem Mikrocontroller 24 durchgeführt werden.

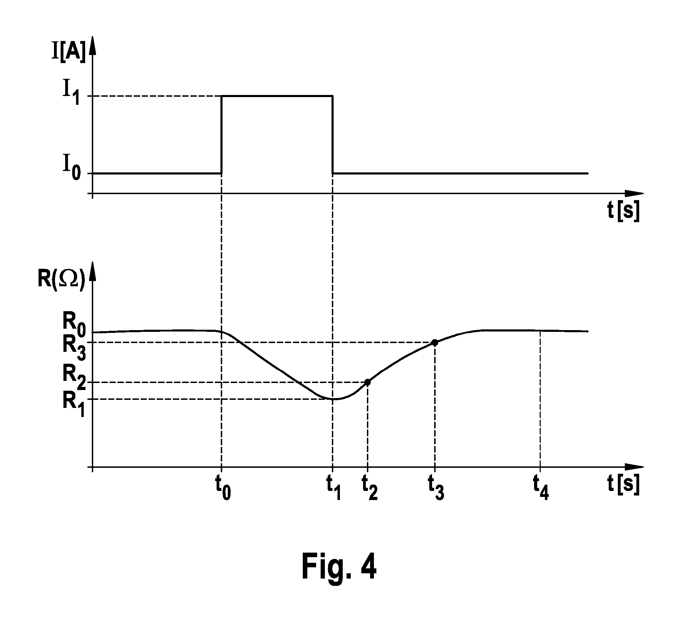

Das Funktionsprinzip der aus Figur 3 bekannten Schaltungsanordnung 23 ist in Figur 4 verdeutlicht. Diese zeigt den Verlauf des elektrischen Widerstand des temperaturabhängigen Widerstands 25 über der Zeit (siehe unteres Diagramm). Das obere Diagramm gibt den Verlauf des durch den temperaturabhängigen Widerstand 25 fließenden Stroms über der Zeit wieder. Zu einem Zeitpunkt, der vor t₀ gelegen ist, fließt durch den Widerstand 25 ein Strom I₀ und der von dem Mikrocontroller 24 ermittelte elektrische Widerstand des Widerstands 25 ist gleich R₀. Aus diesem Widerstand R₀ kann auf die Temperatur des den Widerstand 25 umgebenden Fluids geschlossen werden, sofern ein thermisches Gleichgewicht vorliegt, das heißt, eine vorhergehende Bestimmung des Volumenstroms eine ausreichend lange Zeitspanne zurückliegt. Zu einem Zeitpunkt t₀ schließt der Mikrocontroller 24 über die Verbindung 31 das Schaltelement 30, sodass ein höherer Strom durch den temperaturabhängigen Widerstand 25 fließen kann. Dieser höhere Strom ist in dem oberen Diagramm der Figur 4 durch I₁ gekennzeichnet. Ab diesem Zeitpunkt beginnt, wie in dem unteren Diagramm dargestellt, der elektrische Widerstand des temperaturabhängigen Widerstands 25 zu sinken, da sich dieser durch den höheren Strom I₁ aufheizt. Bei einem Zeitpunkt t₁ ist der elektrische Widerstand auf R₁ abgesunken. Der Mikrocontroller 24 öffnet nun das Schaltelement 30 beziehungsweise unterbricht die zu dem Widerstand 26 parallel geschaltete Verbindung. Dies kann erfolgen, nachdem das Aufheizen des Widerstands 25 über einen gewünschten Zeitraum erfolgt oder ein gewünschter Widerstand R₁ erreicht ist. Das bedeutet, dass in dem Zeitraum t₀ < t < t₁ das Schaltelement 30 geschlossen ist und ein höherer Strom I₁ durch den temperaturabhängigen Widerstand 25 fließt. Ab dem Zeitpunkt t₁ geht der fließende Strom wieder auf den ursprünglichen Wert I₀, wie in dem oberen Diagramm dargestellt, zurück. Gleichzeitig ist bei t₁ die höchste Temperatur des Widerstands 25 und somit der geringste elektrische Widerstand R₁ erreicht. Für t > t₁ beginnt der elektrische Widerstand des Widerstands 25 anzusteigen, da sich seine Temperatur wieder der Temperatur des ihn umgebenden Fluids angleicht, um in ein thermisches Gleichgewicht zu gelangen. Dies wird umso schneller erfolgen, je höher die Strömungsgeschwindigkeit des Fluids beziehungsweise des Kühlmittels und damit der Volumenstrom ist, weil durch eine höhere Strömungsgeschwindigkeit ein höherer Wärmeübergang von dem Widerstand 25 zu dem Fluid beziehungsweise dem Kühlmittel vorliegt. Aus der Geschwindigkeit mit der die Temperatur des Widerstands abfällt beziehungsweise der elektrische Widerstand ansteigt, kann somit auf die Strömungsgeschwindigkeit beziehungsweise den Volumenstrom geschlossen werden. Dies ist wie folgt umgesetzt: Zu einem Zeitpunkt t₂ > t₁ bestimmt der Mikrocontroller 24 einen Widerstand R₂ und damit eine erste Temperatur des Widerstands 25 und zu einem Zeitpunkt t₃ > t₂ einen Widerstand R₃ beziehungsweise eine zweite Temperatur. Damit ist die Geschwindigkeit der Abkühlung des Widerstands 25 zu zwei definierten Zeitpunkten t₂ und t₃ bekannt. Aus diesen Informationen bestimmt der Mikrocontroller 24 den Volumenstrom des Kühlmittels. Zu einem Zeitpunkt t₄ >> t₃ befindet sich der temperaturabhängige Widerstand 25 wieder in einem thermischen Gleichgewicht mit dem Kühlmittel. Ab diesem Zeitpunkt kann die Schaltungsanordnung 23 wieder zur Bestimmung der Temperatur des Fluids verwendet werden.

Die auf diese Weise gemessene Temperatur und/oder der bestimmte Volumenstrom kann/können nun zur Regelung und/oder Steuerung des Kühlkreislaufs 1 verwendet werden. Insbesondere können diese Informationen dazu verwendet werden, eine Funktion der Kühlmittelpumpen 5 und 19 und/oder der Ventile 10 und 18 zu überwachen.

## Patentansprüche

1. Verfahren zur Bestimmung der Temperatur und des Volumenstroms eines Fluids, wobei die Temperatur unter Verwendung eines Temperatursensors (22) gemessen wird, **dadurch gekennzeichnet, dass** zur Bestimmung des Volumenstroms der Temperatursensor (22) unabhängig von dem Fluid, insbesondere vorbestimmt, erwärmt oder abgekühlt wird, und dass dann mittels des Temperatursensors (22) durch Erfassen seiner Temperaturänderung auch der Volumenstrom bestimmt wird.

2. Verfahren nach Anspruch 1, **dadurch gekennzeichnet, dass** als Temperatursensor (22) ein temperaturabhängiger Widerstand (25), insbesondere NTC-Widerstand oder PTC-Widerstand, verwendet wird.

3. Verfahren nach einem oder mehreren der vorhergehenden Ansprüche, **dadurch gekennzeichnet, dass** der Temperatursensor (22) als Teil einer Spannungsteilerschaltung eingesetzt wird.

4. Verfahren nach einem oder mehreren der vorhergehenden Ansprüche, **dadurch gekennzeichnet, dass** ein Signal des Temperatursensors (22) mittels eines Mikrocontrollers (24) ausgewertet und daraus die Temperatur bestimmt wird.

5. Verfahren nach einem oder mehreren der vorhergehenden Ansprüche, **dadurch gekennzeichnet, dass** der Mikrocontroller (24) zur Auswertung über einen A/D-Wandler verfügt.

6. Verfahren nach einem oder mehreren der vorhergehenden Ansprüche, **dadurch gekennzeichnet, dass** das Erwärmen oder Abkühlen des Temperatursensors (22) von dem Mikrocontroller (24) gesteuert und/oder geregelt wird.

7. Verfahren nach einem oder mehreren der vorhergehenden Ansprüche, **dadurch gekennzeichnet, dass** das Erwärmen durch Anlegen einer Spannung an den Temperatursensor (22) erfolgt.

8. Verfahren nach einem oder mehreren der vorhergehenden Ansprüche, **dadurch gekennzeichnet, dass** die Temperaturänderung durch eine bis zum Erreichen einer bestimmten Temperatur benötigte Zeit und/oder eine Temperaturdifferenz zwischen festgelegten Zeitpunkten charakterisiert wird.

9. Verfahren nach einem oder mehreren der vorhergehenden Ansprüche, **dadurch gekennzeichnet, dass** die Bestimmung der Temperaturänderung und des Volumenstroms mittels des Mikrocontrollers (24) erfolgt.

10. Verfahren nach einem oder mehreren der vorhergehenden Ansprüche, **dadurch gekennzeichnet, dass** als Fluid ein Kühlmittel verwendet wird.

11. Verfahren nach einem oder mehreren der vorhergehenden Ansprüche, **dadurch gekennzeichnet, dass** die gemessene Temperatur und/oder der bestimmte Volumenstrom als Eingangsgröße(n) zur Steuerung und/oder Regelung eines Kühlkreislaufs (1), insbesondere eines Kraftfahrzeugs, verwendet wird/werden.

12. Verfahren nach einem oder mehreren der vorhergehenden Ansprüche, **dadurch gekennzeichnet, dass** die Steuerung des Kühlkreislaufs (1) durch Ansteuerung mindestens eines Ventils und/oder mindestens eines Fördermittels (6), insbesondere für Kühlmittel, erfolgt.

13. Verfahren nach einem oder mehreren der vorhergehenden Ansprüche, **dadurch gekennzeichnet, dass** der Mikrocontroller (24) das mindestens eine Ventil (10,18) und/oder das mindestens eine Fördermittel (5,6,19) ansteuert.

14. Verfahren nach einem oder mehreren der vorhergehenden Ansprüche, **dadurch gekennzeichnet, dass** es zu einer Überwachung des Ventils (10,18) und/oder des Fördermittels (5,6,19) eingesetzt wird.

15. Verfahren nach einem oder mehreren der vorhergehenden Ansprüche, **dadurch gekennzeichnet, dass** unmittelbar nach einem Start einer Brennkraftmaschine zunächst der Volumenstrom bestimmt wird.

16. Schaltungsanordnung (23) zur Bestimmung einer Temperatur und eines Volumenstroms eines Fluids, insbesondere zur Umsetzung des Verfahrens nach einem oder mehreren der vorhergehenden Ansprüche, wobei die Temperatur unter Verwendung eines Temperatursensors (22) gemessen wird, **dadurch gekennzeichnet, dass** mittels des Temperatursensors (22) auch der Volumenstrom bestimmbar ist.

17. Motorsteuergerät eines Kraftfahrzeugs, insbesondere mit einer Schaltungsanordnung (23) nach Anspruch 16, wobei das Motorsteuergerät einen Kühlkreislauf (1) des Kraftfahrzeugs steuert und/oder regelt und eine Temperatur und einen Volumenstrom bestimmt, insbesondere unter Umsetzung des Verfahrens nach einem oder mehreren der Ansprüche 1 bis 15, wobei die Temperatur unter Verwendung eines Temperatursensors (22) gemessen wird, **dadurch gekennzeichnet, dass** mittels des Temperatursensors (22) auch der Volumenstrom bestimmbar ist.
